# EUROPEAN PATENT APPLICATION

(11) **EP 4 708 509 A1**
(43) Date of publication of application: **11.03.2026**
(21) Application number: 24802517.3
(22) Date of filing: 11.01.2024
(51) Int. Cl.: H01M 50/244, H01M 50/249

(54) **CONNECTING PLATE FOR BATTERY, BATTERY, ELECTRIC DEVICE, AND METHOD FOR MANUFACTURING BATTERY**

(30) Priority: 09.05.2023 CN 202310514557
(71) Applicant: Contemporary Amperex Technology Co., Limited, Ningde, Fujian 352100 (CN)
(72) Inventor: ZHOU, Huazhong, Ningde, Fujian 352100 (CN); CUI, Lu, Ningde, Fujian 352100 (CN)
(74) Representative: Gong, Jinping
(86) International application number: PCT/CN2024/071728
(87) International publication number: WO 2024/230229

(57) **Abstract**

Embodiments of this application provide a connection plate of a battery, a battery, an electric apparatus, and a manufacturing method for a battery. The connection plate of a battery includes two first surfaces and a second surface. The two first surfaces are oppositely disposed along a thickness direction of the connection plate. The first surface is configured to be bonded to a battery cell via a binder. At least one first surface is provided with a first opening. The second surface connects the two first surfaces and the second surface is provided with a second opening, where the second opening is in communication with the first opening. Providing the first opening and the second opening allows a path to exist on the first surface of the connection plate facing the battery cell, the path being in communication with the second surface on a side of the connection plate. This enables injection of the binder through the second surface into the first surface, facilitating bonding of the first surface to the battery cell. This approach allows control over the amount of the binder used during bonding of the first surface to the battery cell, improving the accuracy of the amount of binder.

## Description

### CROSS-REFERENCE TO RELATED APPLICATIONS

This application claims priority to Chinese Patent Application No. 202310514557.6, filed on May 9, 2023, entitled "CONNECTION PLATE OF BATTERY, BATTERY, ELECTRIC APPARATUS, AND MANUFACTURING METHOD FOR BATTERY," which is incorporated herein by reference in its entirety.

### TECHNICAL FIELD

This application pertains to the field of battery technology, particularly relating to a connection plate of a battery, a battery, an electric apparatus, and a manufacturing method for a battery.

### BACKGROUND

With the increasing depletion of natural resources and the aggravation of environmental damage, interest in apparatuses capable of storing energy and effectively utilizing stored energy has grown across various fields. Batteries, as systems capable of being combined and utilizing new renewable energy, have garnered widespread attention. In the field of battery technology, improving the structure of batteries and enhancing their reliability represent a significant research direction.

### SUMMARY

An embodiment of this application provides a connection plate of a battery, a battery, an electric apparatus, and a manufacturing method for a battery, improving the structure of the connection plate within the battery, reducing interference issues between the connection plate and other components, and enhancing the reliability of the battery.

According to a first aspect, an embodiment of this application provides a connection plate of a battery, including two first surfaces and a second surface. The two first surfaces are oppositely disposed along a thickness direction of the connection plate. Each first surface is configured to be bonded to a battery cell via a binder. At least one first surface is provided with a first opening. The second surface connects the two first surfaces and the second surface is provided with a second opening, the second opening being in communication with the first opening.

By adopting the above structure, providing the first opening and the second opening first allows a path to exist on the first surface of the connection plate facing the battery cell, the path being in communication with the second surface of the connection plate. This enables injection of the binder through the second opening into the first opening, facilitating bonding of the first surface to the battery cell. This approach allows control over the amount of the binder used during bonding of the first surface to the battery cell, improving the accuracy of the amount of the binder. This reduces the problem of excessive binder between the first surface and the battery cell leading to overflow and interference with other components within the battery, as well as the problem of insufficient binder between the first surface and the battery cell resulting in reduced battery reliability. Second, after altering the structure of the connection plate, the bonding step between the connection plate and the battery cell can be performed after the battery cell and the connection plate are installed in a box of the battery. This allows the connection plate and the battery cell to be independently installed into the box, reducing the difficulty of installing the battery cell and the connection plate into the box and facilitating an increase in battery production efficiency.

In some optional embodiments of this application, both first surfaces are provided with the first opening.

By adopting the above structure, providing the first opening on both first surfaces enables both first surfaces to be bonded to battery cells, enhancing the versatility of the connection plate.

In some optional embodiments of this application, the first openings on the two first surfaces are opposite each other along the thickness direction.

By adopting the above structure, having the first openings on the two first surfaces opposite each other along the thickness direction ensures that the positions of the first openings on both first surfaces are identical. This facilitates maintaining a substantially consistent binder output on both first surfaces, thereby improving the consistency of bonding between both sides of the connection plate and the battery cells.

In some optional embodiments of this application, a receiving cavity is provided inside the connection plate, the receiving cavity being configured to enable communication between the first opening and the second opening.

By adopting the above structure, providing the receiving cavity first allows a certain redundant space inside the connection plate, facilitating the buffering of a certain amount of binder within the connection plate and enhancing bonding strength. Second, this facilitates communication between multiple first openings and the second opening when multiple first openings are provided on the first surfaces.

In some optional embodiments of this application, the first surface is provided with multiple first openings.

By adopting the above structure, providing the multiple first openings on the first surface enhances the uniformity of binder distribution on the first surface, thereby improving the bonding quality between the first surface and the battery cell.

In some optional embodiments of this application, the first opening is at least one of a rectangle, circle, square, rhombus, trapezoid, triangle, or ellipse.

By adopting the above structure, restricting the shape of the first opening enables the first opening to be adapted to different models of battery cells and different types of binders, improving the bonding quality between the first surface and the battery cell.

In some optional embodiments of this application, the multiple first openings on the first surface are arranged in a rectangular array.

By adopting the above structure, arranging the multiple first openings on the first surface in a rectangular array enhances the uniformity of distribution of the first openings on the first surface. This results in a more uniform distribution of binder on the first surface, thereby improving the bonding quality between the first surface and the battery cell.

In some optional embodiments of this application, among the multiple first openings on the first surface, an area of a first opening near a center of the first surface is greater than or equal to an area of a first opening near an edge of the first surface.

By adopting the above structure, the area of the first opening near the center of the first surface is greater than or equal to the area of the first opening near the edge of the first surface, which conforms to the flowability of the binder, facilitating the overflow of the binder through the first opening onto the first surface. Second, this positions regions of the first surface with greater overflow capacity at the center of the first surface, reducing the risk of the binder overflow at the edges of the first surface.

In some optional embodiments of this application, the first opening extends along a first direction, the multiple first openings are spaced apart along a second direction, and the first direction, the second direction, and the thickness direction are pairwise perpendicular.

By adopting the above structure, having the first opening extend along the first direction and multiple first openings spaced apart along the second direction fully utilizes the first surface. This facilitates adjustment of the area proportion of the first openings on the first surface, enhancing the adaptability of the area of the first openings to different types of binders. For instance, when the binder has high viscosity and low flowability, a larger area of the first openings on the first surface is required.

According to a second aspect, an embodiment of this application provides a battery including a battery unit, the connection plate of a battery described above, and a binder. The battery unit includes multiple battery cells arranged along a first direction, the first direction being perpendicular to the thickness direction of the connection plate. At least a portion of the binder is exposed at the first opening to bond the first surface and the multiple battery cells.

By adopting the above structure, injecting the binder through the second opening into the first opening enables the binder to be exposed at the first opening to bond the first surface and the multiple battery cells. This facilitates control over the amount of the binder used during bonding of the first surface to the battery cells, thereby improving the bonding quality between the binder and the connection plate and enhancing the reliability of the battery.

In some optional embodiments of this application, multiple battery units are provided, the multiple battery units being arranged along the thickness direction. Both first surfaces of the connection plate are provided with the first opening, and the two first surfaces of the connection plate are bonded to multiple battery cells of two adjacent battery units via the binder, respectively.

By adopting the above structure, providing the first opening on both first surfaces of the connection plate and bonding the two first surfaces of the connection plate to multiple battery cells of two battery units via the binder enable both first surfaces on two sides of the connection plate to be bonded to the battery units, enhancing the reliability of the battery.

In some optional embodiments of this application, the battery includes a first end plate and a second end plate. The first end plate and the second end plate are respectively disposed at two ends of the battery unit along the first direction, and the connection plate connects the first end plate and the second end plate.

By adopting the above structure, providing the first end plate and the second end plate first enables the first end plate, the second end plate, and the connection plate to enclose and constrain the structure of the battery unit, effectively protecting the battery unit. Second, this allows the connection plate to serve as an enclosing structure for the battery unit, enhancing the reliability of the battery while reducing the occupation of internal space within the battery.

In some optional embodiments of this application, the battery further includes a box. The battery unit and the connection plate are accommodated within the box, the box including a connection structure. The connection plate is connected to the connection structure, and the second surface is disposed at an end of the connection plate away from the connection structure.

By adopting the above structure, providing the box first provides a main housing structure for the battery, enhancing the structural strength of the battery. Second, providing the connection structure enables stable installation of the connection plate within the box, facilitating determination of the positional relationship between the battery unit and the connection plate and improving the assembly efficiency of the internal structure of the battery.

According to a third aspect, an embodiment of this application provides an electric apparatus including the battery described above, the battery being configured to provide electrical energy.

According to a fourth aspect, an embodiment of this application provides a manufacturing method for a battery, including:
providing a battery cell, a connection plate, and a binder, the connection plate including two first surfaces and a second surface connecting the two first surfaces, the two first surfaces being oppositely disposed along a thickness direction of the connection plate, at least one first surface being provided with a first opening, the second surface being provided with a second opening, and the second opening being in communication with the first opening;
adjusting positions of the battery cell and the connection plate so that the first opening faces the battery cell; and
injecting the binder into the second opening so that the binder overflows through the first opening to bond the battery cell to the first surface of the connection plate.

By adopting the above method, injecting the binder into the second opening causes the binder to overflow through the first opening, filling a gap between the battery cell and the connection plate and bonding the battery cell to the connection plate. This facilitates control over the amount of the binder used during bonding of the first surface to the battery cell, improving the accuracy of the amount of the binder. This reduces the problem of excessive binder between the first surface and the battery cell leading to overflow and interference with other components within the battery, as well as the problem of insufficient binder between the first surface and the battery cell resulting in reduced battery reliability.

In some optional embodiments of this application, the manufacturing method further includes:
providing a box.

The adjusting positions of the battery cell and the connection plate includes:
installing the battery cell and the connection plate into the box separately; and
adjusting the positions of the battery cell and the connection plate so that the first opening faces the battery cell.

By adopting the above method, installing the battery cell and the connection plate into the box separately enables independent installation of the connection plate and the battery cell into the box. This reduces the difficulty of installing the battery cell and the connection plate into the box, facilitating an increase in battery production efficiency.

Compared with related technologies, the connection plate of a battery, the battery, the electric apparatus, and the manufacturing method for the battery in the embodiments of this application, by providing the first opening and the second opening, first allow a path to exist on the first surface of the connection plate facing the battery cell, the path being in communication with the second surface of the connection plate. This enables injection of the binder through the second opening into the first opening, facilitating bonding of the first surface to the battery cell. This approach allows control over the amount of the binder used during bonding of the first surface to the battery cell, improving the accuracy of the amount of the binder. This reduces the problem of excessive binder between the first surface and the battery cell leading to overflow and interference with other components within the battery, as well as the problem of insufficient binder between the first surface and the battery cell resulting in reduced battery reliability. Second, after altering the structure of the connection plate, the bonding step between the connection plate and the battery cell can be performed after the battery cell and the connection plate are installed in the box of the battery. This allows the connection plate and the battery cell to be independently installed into the box, reducing the difficulty of installing the battery cell and the connection plate into the box and facilitating an increase in battery production efficiency.

### BRIEF DESCRIPTION OF DRAWINGS

To more clearly illustrate the technical solutions of the embodiments of this application, the drawings required for use in the embodiments of this application are briefly introduced below. Obviously, the drawings described below are merely some embodiments of this application. For those of ordinary skill in the art, other drawings can be obtained based on these drawings without creative effort.
FIG. 1 is a structural schematic diagram of a vehicle provided by some embodiments of this application.
FIG. 2 is a structural schematic diagram of a connection plate and a battery unit provided by some embodiments of this application.
FIG. 3 is a partial enlarged schematic diagram at B in FIG. 2.
FIG. 4 is a structural schematic diagram of a connection plate and a battery unit provided by some other embodiments of this application.
FIG. 5 is a structural schematic diagram of a connection plate provided by some embodiments of this application.
FIG. 6 is a cross-sectional schematic diagram of plane A in FIG. 5 provided by some embodiments of this application.
FIG. 7 is a cross-sectional schematic diagram of a connection plate provided by some other embodiments of this application.
FIG. 8 is a structural schematic diagram of a connection plate provided by some other embodiments of this application.
FIG. 9 is a structural schematic diagram of a connection plate provided by still some other embodiments of this application.
FIG. 10 is a structural schematic diagram of a connection plate provided by yet still some other embodiments of this application.
FIG. 11 is a structural schematic diagram of a connection plate provided by some additional embodiments of this application.
FIG. 12 is a structural schematic diagram of a battery provided by some embodiments of this application.
FIG. 13 is a structural schematic diagram of a second box portion, a battery unit, and a connection plate provided by some embodiments of this application.
FIG. 14 is a schematic flowchart of a manufacturing method for a battery provided by some embodiments of this application.
FIG. 15 is a schematic flowchart of a manufacturing method for a battery provided by other embodiments of this application.

### Reference signs in the drawings:

1000. vehicle; 100. battery; 110. box; 101. first box portion; 102. second box portion; 1021. connection structure; 200. controller; 300. motor; 400. battery unit; 401. frame; 4011. first end plate; 4012. second end plate; 10. battery cell; 20. connection plate; 30. binder; 21. first surface; 211. first opening; 22. second surface; 221. second opening; 23. connector; 24. receiving cavity;
x. thickness direction; y. first direction; and z. second direction.

### DESCRIPTION OF EMBODIMENTS

The embodiments of the technical solutions of this application are described in detail below with reference to the drawings. The following embodiments are merely used to more clearly illustrate the technical solutions of this application and thus serve only as examples, not limiting the scope of protection of this application.

Unless otherwise defined, all technical and scientific terms used herein have the same meanings as commonly understood by those skilled in the technical field of this application. Terms used herein are solely for the purpose of describing specific embodiments and are not intended to limit this application. The terms "include" and "have" and any variations thereof in the description, claims, and the above description of drawings of this application are intended to cover non-exclusive inclusion.

In the description of the embodiments of this application, technical terms such as "first" and "second" are used only to distinguish different objects and should not be understood as indicating or implying relative importance or implicitly indicating the number, specific order, or primary-secondary relationship of the technical features indicated.

Reference herein to "embodiment" means that a particular feature, structure, or characteristic described in connection with the embodiment may be included in at least one embodiment of this application. The appearance of this phrase in various places in the description does not necessarily refer to the same embodiment, nor is the embodiment an independent or alternative embodiment mutually exclusive with other embodiments. Those skilled in the art explicitly and implicitly understand that the embodiments described herein may be combined with other embodiments.

In the description of the embodiments of this application, the term "and/or" merely describes an associative relationship between associated objects, indicating that three relationships may exist. For example, A and/or B may indicate: A exists alone, A and B exist simultaneously, and B exists alone. Additionally, the character "/" herein generally indicates that the associated objects before and after are in an "or" relationship.

In the description of the embodiments of this application, the term "multiple" refers to two or more (including two). Similarly, "multiple groups" refers to two or more groups (including two groups), and "multiple pieces" refers to two or more pieces (including two pieces).

In the description of the embodiments of this application, orientation or positional relationships indicated by technical terms such as "center," "longitudinal," "lateral," "length," "width," "thickness," "upper," "lower," "front," "rear," "left," "right," "vertical," "horizontal," "top," "bottom," "inner," "outer," "clockwise," "counterclockwise," "axial," "radial," and "circumferential" are based on the orientation or positional relationships shown in the drawings. These are merely for convenience in describing the embodiments of this application and simplifying the description, and do not indicate or imply that the devices or elements referred to must have a specific orientation, be constructed, or operate in a specific orientation. Thus, these should not be construed as limitations on the embodiments of this application.

In the description of the embodiments of this application, unless explicitly specified and limited otherwise, technical terms such as "install," "join," "connect," and "fix" should be understood in a broad sense. For example, a connection may be a fixed connection, a detachable connection, or an integral formation; a mechanical connection or an electrical connection; a direct connection or an indirect connection via an intermediary; or an internal communication between two elements or an interaction relationship between two elements. Those of ordinary skill in the art can understand the specific meanings of the above terms in the embodiments of this application based on specific circumstances.

In the development of battery technology, multiple design factors such as energy density and cycle life need to be considered simultaneously. Among these, the reliability of batteries has become one of the obstacles restricting further promotion of batteries.

In batteries, to enhance the connection strength between components, connection structures such as connection plates are typically provided to improve connection strength. Connection plates are generally used to connect multiple battery cells within a battery to enhance the connection strength between the multiple battery cells. The connection plate and the battery cells may be bonded by filling with a binder. However, in related battery production processes, the binder is typically applied to the connection plate first, followed by bonding the connection plate to the battery cells. In the aforementioned production process, on one hand, during the application of the binder to the connection plate, the amount of binder is usually fixed and cannot account for the actual flatness of the bonding surfaces of the battery cells and the connection plate. For example, if the bonding surface is convex, the gap between the battery cell and the connection plate is small, yet the same amount of binder is used, easily leading to binder overflow from the edges of the bonding surface and interference with other components. Alternatively, if the bonding surface is concave, the gap between the battery cell and the connection plate is large, yet the same amount of binder is used, easily resulting in an insufficient binder filling region, reducing the connection strength between the battery cell and the connection plate.

To address the interference issues of the binder within batteries and enhance battery reliability, improving the connection plate within the battery and altering the manner in which the binder is applied to the connection plate can align the binder application process with the gap between the connection plate and the battery cell. For instance, injecting the binder into the gap between the connection plate and the battery cell facilitates precise control of the binder amount, mitigating binder interference within the battery and improving battery reliability.

Based on the above considerations, a connection plate of a battery, a battery, an electric apparatus, and a manufacturing method for a battery are provided.

An embodiment of this application provides an electric apparatus using a battery as a power source. The electric apparatus may include, but is not limited to, electric toys, electric tools, electric bicycles, electric vehicles, ships, and spacecraft. Electric toys may include stationary or mobile electric toys, such as game consoles, electric car toys, electric ship toys, and electric airplane toys. Spacecraft may include airplanes, rockets, space shuttles, and spaceships.

For ease of description, the following embodiments take an electric apparatus as a vehicle 1000 as an example.

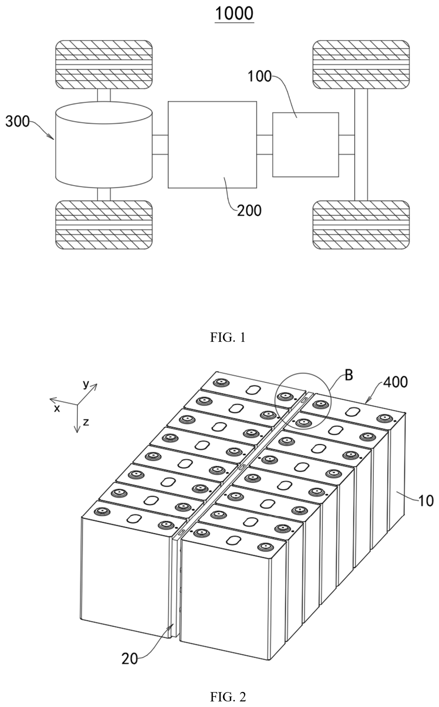

FIG. 1 is a structural schematic diagram of a vehicle 1000 provided by some embodiments of this application.

As shown in FIG. 1, the vehicle 1000 may be a fuel vehicle, a gas vehicle, or a new energy vehicle. The new energy vehicle may be a pure electric vehicle, a hybrid electric vehicle, or an extended-range electric vehicle. A battery 100 is provided inside the vehicle 1000, and the battery 100 may be disposed at the bottom, front, or rear of the vehicle 1000. The battery 100 may be used to supply power to the vehicle 1000; for example, the battery 100 may serve as an operational power source for the vehicle 1000. The vehicle 1000 may further include a controller 200 and a motor 300, the controller 200 being configured to control the battery 100 to supply power to the motor 300, such as for the operational power demands of starting, navigating, and driving the vehicle 1000.

In some embodiments of this application, the battery 100 may not only serve as an operational power source for the vehicle 1000 but also as a driving power source for the vehicle 1000, replacing or partially replacing fuel or natural gas to provide driving power for the vehicle 1000.

In the embodiments of this application, the battery 100 referred to is a single physical module including one or more battery cells to provide higher voltage and capacity. For example, the battery 100 mentioned in this application may include a battery module or a battery pack.

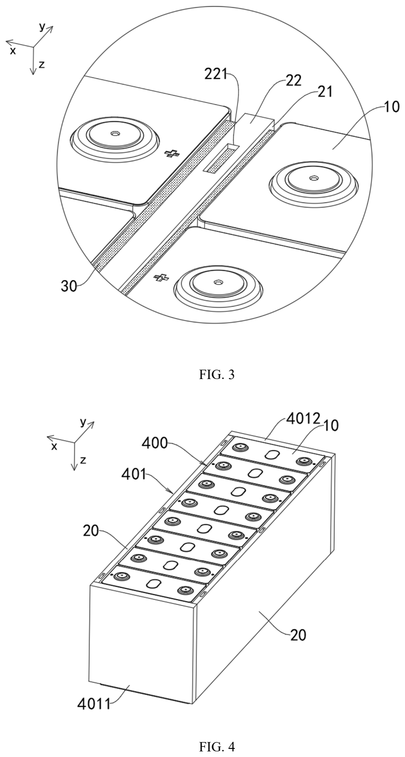

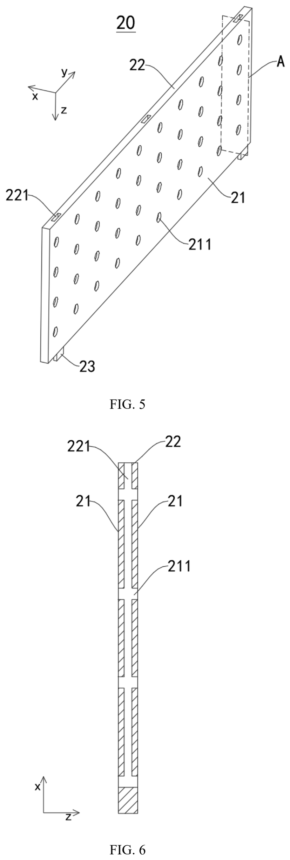

FIG. 2 is a structural schematic diagram of a connection plate 20 and a battery unit 400 provided by some embodiments of this application; FIG. 3 is a partial enlarged schematic diagram at B in FIG. 2; FIG. 4 is a structural schematic diagram of a connection plate 20 and a battery unit 400 provided by some other embodiments of this application; FIG. 5 is a structural schematic diagram of a connection plate 20 provided by some embodiments of this application; and FIG. 6 is a cross-sectional schematic diagram of plane A in FIG. 5 provided by some embodiments of this application.

As shown in FIG. 2 to FIG. 6, in some optional embodiments of this application, a connection plate 20 of a battery 100 is provided, including two first surfaces 21 and a second surface 22. The two first surfaces 21 are oppositely disposed along a thickness direction x of the connection plate 20. Each first surface 21 is configured to be bonded to a battery cell 10 via a binder 30. At least one first surface 21 is provided with a first opening 211. The second surface 22 connects the two first surfaces 21 and the second surface 22 is provided with a second opening 221, the second opening 221 being in communication with the first opening 211.

The first surface 21 may be a wall surface on both sides of the connection plate 20 along the thickness direction x. Taking the connection plate 20 as a rectangular plate as an example, the two first surfaces 21 may be the two wall surfaces with the largest area on the connection plate 20.

The second surface 22 may be a wall surface on the connection plate 20 connecting the two first surfaces 21 on both sides along the thickness direction x. Taking the connection plate 20 as a rectangular plate as an example, the second surface 22 may be any side wall surface connecting the two wall surfaces with the largest area on the connection plate 20.

The binder 30 may be a gel used within the battery 100 to fill gaps between components.

The first opening 211 may be an opening structure provided on the first surface 21 or a hole structure provided on the first surface 21 and extending along the thickness direction x, such as a blind hole or a recessed groove.

The second opening 221 may be an opening structure provided on the second surface 22 or a hole structure provided on the second surface 22 and extending toward the interior of the connection plate 20, such as a blind hole or a recessed groove.

The second opening 221 being in communication with the first opening 211 may mean that the first opening 211 and the second opening 221 intersect inside the connection plate 20 when extending toward the interior of the connection plate 20, forming communication. Alternatively, a cavity structure or a channel structure may be provided inside the connection plate 20, connecting the first opening 211 and the second opening 221 through the cavity structure or the channel structure.

Providing the first opening 211 and the second opening 221 allows a path to exist on the first surface 21 of the connection plate 20 facing the battery cell 10, the path being in communication with the second surface 22 on the side of the connection plate 20. This enables injection of the binder 30 through the second opening 221 into the first opening 211, facilitating bonding of the first surface 21 to the battery cell 10. This approach allows control over the amount of the binder 30 used during bonding of the first surface 21 to the battery cell 10, improving the accuracy of the amount of the binder 30. This reduces the problem of excessive binder 30 between the first surface 21 and the battery cell 10 leading to overflow and interference with other components within the battery 100, as well as the problem of insufficient binder 30 between the first surface 21 and the battery cell 10 resulting in reduced reliability of the battery 100.

In some embodiments, one of the two first surfaces 21 may be provided with multiple first openings 211. The second surface 22 may be provided with multiple second openings 221, with the multiple first openings 211 being respectively in communication with the multiple second openings 221. Alternatively, the second surface 22 may be provided with one second opening 221, with the multiple first openings 211 being in communication with the one second opening 221. Understandably, when the number of second openings 221 differs from the number of first openings 211, one second opening 221 may correspond to and be in communication with multiple first openings 211.

In some embodiments, the second surface 22 may be provided with three second openings 221, with two of the three second openings 221 being disposed at two ends of the second surface 22 along a first direction y, and the remaining one being disposed at a center between the former two. This arrangement ensures relatively uniform positioning of the three second openings 221 on the second surface 22, enhancing the uniformity of transmission of the binder 30 from the second openings 221 to the first openings 211 across the first surface 21.

In some embodiments, an end of the connection plate 20 away from the second surface 22 may be provided with a connector 23, and the connection plate 20 may be connected to an installation position via the connector 23. For example, the connection plate 20 may be connected to a connection structure 1021 on a box 110 of the battery 100 via the connector 23. Understandably, the specific arrangement form of the connector 23 may depend on the type of connection between the connector 23 and the connection structure 1021. For instance, when the connection plate 20 and the box 110 are connected by snap-fit, one of the connector 23 and the connection structure 1021 may be a groove, and the other may be a protrusion; when the connection plate 20 and the box 110 are connected by a fastening structure, one of the connector 23 and the connection structure 1021 may have an internal thread, and the other may have an external thread.

In some embodiments, an end of the connection plate 20 away from the second surface 22 may be provided with a connection protrusion, and the box 110 may be provided with a connection groove. The connection plate 20 and the box 110 may be connected via a concave-convex fit between the connection protrusion and the connection groove. Understandably, the number of connection protrusions and connection grooves may be set to multiple based on actual conditions.

In some embodiments, battery cells 10 in the battery 100 are typically closely arranged in a certain direction to form a battery unit 400. To expand the capacity of the battery 100, multiple battery units 400 may be arranged side by side in the battery 100. For example, multiple battery cells 10 within the battery unit 400 may be arranged along the first direction y, and multiple battery units 400 may be arranged along the thickness direction x.

Referring to FIG. 2, in some embodiments, the battery 100 includes two battery units 400 arranged along the thickness direction x. The connection plate 20 may be a middle partition plate located between the two battery units 400, with the two first surfaces 21 on the connection plate 20 facing the battery units 400 on both sides, and each of the two first surfaces 21 being provided with multiple first openings 211.

Referring to FIG. 4, in some embodiments, the battery 100 includes one battery unit 400. A frame 401 enclosing the peripheral side of the battery unit 400 perpendicular to a second direction z may be provided. The connection plate 20 may be a component of the frame 401. For example, when the frame 401 is a rectangular frame, the connection plate 20 may be any one or both of the oppositely disposed sides of the rectangular frame 401. The second direction z is perpendicular to the first direction y and the thickness direction x, and the first surface 21 of the connection plate 20 facing the battery unit 400 is provided with a first opening 211. Providing the frame 401 enhances the structural strength of the battery unit 400.

In practical use, the connection plate 20 may first be installed in the box 110 and fixed to the box 110, followed by installing the battery cells 10 into the box 110. During installation, the positional relationship of each battery cell 10 relative to the connection plate 20 is adjusted so that the positions of the battery cells 10 relative to the connection plate 20 are substantially equal. Then, the binder 30 is injected into the second opening 221, connecting each battery cell 10 to the connection plate 20 via the binder 30. Ensuring that the positions of the battery cells 10 relative to the connection plate 20 are substantially equal enhances the uniformity of connection strength after bonding of each battery cell 10 to the connection plate 20, thereby improving the overall structural strength of the battery 100.

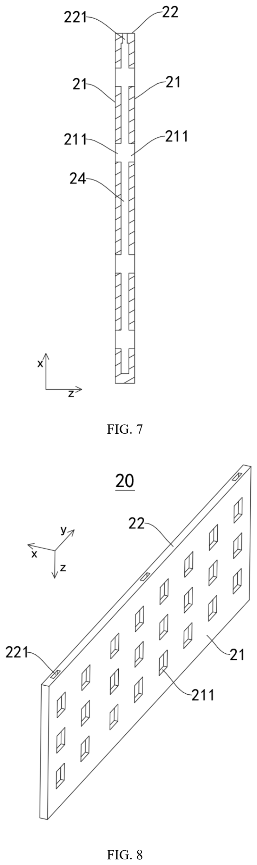

FIG. 7 is a cross-sectional schematic diagram of a connection plate 20 provided by some other embodiments of this application.

As shown in FIG. 6 and FIG. 7, in some optional embodiments of this application, both first surfaces 21 are provided with the first opening 211.

Providing the first opening 211 on both first surfaces 21 enables both first surfaces 21 to be bonded to battery cells 10, enhancing the versatility of the connection plate 20.

As shown in FIG. 6 and FIG. 7, in some optional embodiments of this application, the first openings 211 on the two first surfaces 21 are opposite each other along the thickness direction x.

Having the first openings 211 on the two first surfaces 21 opposite each other along the thickness direction x ensures that the positions of the first openings 211 on both first surfaces 21 are identical. This facilitates maintaining a substantially consistent binder output on both first surfaces 21, thereby improving the consistency of bonding between both sides of the connection plate 20 and the battery cells 10.

In some embodiments, in a plane perpendicular to the thickness direction x, projections of the first openings 211 on the two first surfaces 21 overlap.

In some embodiments, the first opening 211 may be a through-hole extending along the thickness direction x and penetrating the connection plate 20, meaning one end of the first opening 211 is located on one of the two first surfaces 21, and the other end is located on the other of the two first surfaces 21. The second opening 221 may be a through-hole extending along the second direction z, meaning one end of the second opening 221 is located on the second surface 22, and the other end is located on a side wall of the first opening 211, thereby enabling communication between the first opening 211 and the second opening 221.

As shown in FIG. 7, in some optional embodiments of this application, a receiving cavity 24 is provided inside the connection plate 20, the receiving cavity 24 being configured to enable communication between the first opening 211 and the second opening 221.

Providing the receiving cavity 24 first allows a certain redundant space inside the connection plate 20, facilitating the buffering of a certain amount of binder 30 within the connection plate 20 and enhancing bonding strength. Second, this facilitates communication between the multiple first openings 211 and the second opening 221 when the multiple first openings 211 are provided on the first surface 21.

As shown in FIG. 5 to FIG. 7, in some optional embodiments of this application, the first surface 21 is provided with multiple first openings 211. Providing multiple first openings 211 on the first surface 21 enhances the uniformity of distribution of the binder 30 on the first surface 21, thereby improving the bonding quality between the first surface 21 and the battery cell 10.

In some embodiments, the shapes of the multiple first openings 211 may differ.

In some embodiments, the shapes of the multiple first openings 211 may be identical.

In some embodiments, the areas of the multiple first openings 211 may differ.

In some embodiments, the areas of the multiple first openings 211 may be identical.

In some embodiments, the multiple first openings 211 may be spaced apart along the first direction y on the first surface 21.

In some embodiments, the multiple first openings 211 may be spaced apart along the second direction z on the first surface 21.

FIG. 8 is a structural schematic diagram of a connection plate 20 provided by some other embodiments of this application.

As shown in FIG. 5 and FIG. 8, in some optional embodiments of this application, the first opening 211 is at least one of a rectangle, circle, square, rhombus, trapezoid, triangle, or ellipse. Restricting the shape of the first opening 211 enables the first opening 211 to be adapted to different models of battery cells and different types of binders 30, improving the bonding quality between the first surface 21 and the battery cell 10.

Understandably, the first opening 211 may also be configured in other shapes. In practical use, the specific shape of the first opening 211 may be selected based on factors such as the type of binder 30 and the model of the battery cell.

As shown in FIG. 5 and FIG. 8, in some optional embodiments of this application, the multiple first openings 211 on the first surface 21 are arranged in a rectangular array.

Arranging the multiple first openings 211 on the first surface 21 in a rectangular array enhances the uniformity of distribution of the first openings 211 on the first surface 21. This results in a more uniform distribution of the binder 30 on the first surface 21, thereby improving the bonding quality between the first surface 21 and the battery cell 10.

Taking the connection plate 20 as a rectangular plate as an example, the first direction y may be parallel to a length direction of the connection plate 20, and the second direction z may be parallel to a width direction of the connection plate 20.

In some embodiments, the multiple first openings 211 may be arranged in a rectangular array along the first direction y and the second direction z on the first surface 21.

In some embodiments, the first openings 211 along the first direction y may be arranged in ten columns, and the first openings 211 along the second direction z may be arranged in four rows.

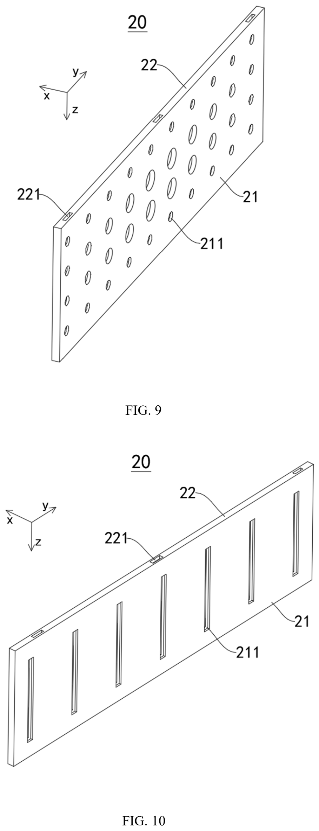

FIG. 9 is a structural schematic diagram of a connection plate 20 provided by still some other embodiments of this application.

As shown in FIG. 9, in some optional embodiments of this application, among the multiple first openings 211 on the first surface 21, an area of a first opening 211 near a center of the first surface 21 is greater than or equal to an area of a first opening 211 near an edge of the first surface 21.

The area of the first opening 211 near the center of the first surface 21 is greater than or equal to the area of the first opening 211 near the edge of the first surface 21, which conforms to the flowability of the binder 30, facilitating the overflow of the binder 30 through the first opening 211 onto the first surface 21. Second, this positions regions of the first surface 21 with greater overflow capacity at the center of the first surface 21, reducing the risk of the binder overflow at the edges of the first surface 21.

The connection plate 20 being a rectangular plate is used as an example.

In some embodiments, a central region may be defined with an intersection point of two diagonal lines of the connection plate 20 as a center and within a threshold radius range. The area of the first opening 211 within the central region is greater than the area of the first opening 211 outside the central region.

In some embodiments, the area of the first openings 211 may gradually increase toward the center, with the intersection point of the two diagonal lines of the connection plate 20 as the center point.

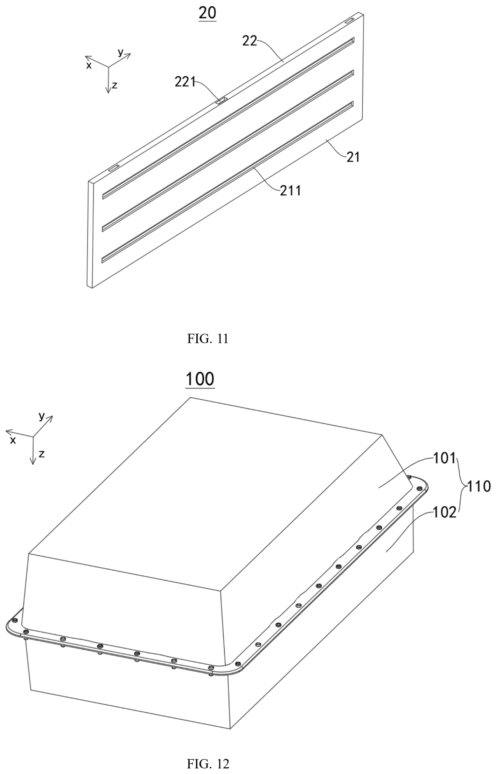

FIG. 10 is a structural schematic diagram of a connection plate 20 provided by yet still some other embodiments of this application, and FIG. 11 is a structural schematic diagram of a connection plate 20 provided by some additional embodiments of this application.

As shown in FIG. 10 and FIG. 11, in some optional embodiments of this application, the first opening 211 extends along the first direction y, multiple first openings 211 are spaced apart along the second direction z, and the first direction y, the second direction z, and the thickness direction x are pairwise perpendicular.

Having the first opening 211 extend along the first direction y and multiple first openings 211 spaced apart along the second direction z fully utilizes the first surface 21. This facilitates adjustment of the area proportion of the first openings 211 on the first surface 21, enhancing the adaptability of the area of the first openings 211 to different types of binders 30. For instance, when the binder 30 has high viscosity and low flowability, a larger area of the first openings 211 on the first surface 21 is required.

Taking the connection plate 20 as a rectangular plate as an example, the first direction y may be parallel to a length direction of the connection plate 20, and the second direction z may be parallel to a width direction of the connection plate 20.

Referring to FIG. 10, in some embodiments, in a plane perpendicular to the thickness direction x, a projection of the first opening 211 may be a rectangle with a length direction parallel to the second direction z, and multiple first openings 211 are spaced apart along the first direction y.

Referring to FIG. 11, in some embodiments, in a plane perpendicular to the thickness direction x, a projection of the first opening 211 may be a rectangle with a length direction parallel to the first direction y, and multiple first openings 211 are spaced apart along the second direction z.

FIG. 12 is a structural schematic diagram of a battery 100 provided by some embodiments of this application.

As shown in FIG. 2 to FIG. 4 and FIG. 12, in some optional embodiments of this application, a battery 100 is provided, including a battery unit 400, the connection plate 20 of the battery 100 described above, and a binder 30. The battery unit 400 includes multiple battery cells 10 arranged along a first direction y, the first direction y being perpendicular to a thickness direction x of the connection plate 20. At least a portion of the binder 30 is exposed at the first opening 211 to bond the first surface 21 and the multiple battery cells 10.

In the above embodiments, injecting the binder through the second opening 221 into the first opening 211 enables the binder 30 to be exposed at the first opening 211 to bond the first surface 21 and the multiple battery cells 10. This facilitates control over the amount of the binder used during bonding of the first surface 21 to the battery cells 10, thereby improving the bonding quality between the binder 30 and the connection plate 20 and enhancing the reliability of the battery 100.

Understandably, the binder 30 may be injected into the second opening 221, causing the binder 30 to flow out from the first opening 211 to fill a gap between the first surface 21 and the multiple battery cells 10, bonding the first surface 21 to the multiple battery cells 10.

As shown in FIG. 2, FIG. 3, and FIG. 12, in some optional embodiments of this application, multiple battery units 400 are provided, the multiple battery units 400 being arranged along the thickness direction x. Both first surfaces 21 of the connection plate 20 are provided with first openings 211, and the two first surfaces 21 of the connection plate 20 are bonded to the multiple battery cells 10 of two adjacent battery units 400 via the binder 30, respectively.

Providing first openings 211 on both first surfaces 21 of the connection plate 20 and bonding the two first surfaces 21 of the connection plate 20 to the multiple battery cells 10 of two battery units 400 via the binder 30 enable both first surfaces 21 on two sides of the connection plate 20 to be bonded to the battery units 400, enhancing the reliability of the battery.

Taking the connection plate 20 as a rectangular plate as an example, the first direction y may be parallel to a length direction of the connection plate 20, and the second direction z may be parallel to a width direction of the connection plate 20.

In some embodiments, the battery 100 may include two battery units 400 arranged along the second direction z. The connection plate 20 may be disposed between the two battery units 400, and at least a portion of the binder 30 is exposed at the first openings 211 of the two first surfaces 21 to bond the connection plate 20 and the multiple battery cells 10 of the two battery units 400.

As shown in FIG. 4, in some optional embodiments of this application, the battery 100 includes a first end plate 4011 and a second end plate 4012. The first end plate 4011 and the second end plate 4012 are respectively disposed at two ends of the battery unit 400 along the first direction y, and the connection plate 20 connects the first end plate 4011 and the second end plate 4012.

Providing the first end plate 4011 and the second end plate 4012 first enables the first end plate 4011, the second end plate 4012, and the connection plate 20 to enclose and constrain the structure of the battery unit 400, effectively protecting the battery unit 400. Second, this allows the connection plate 20 to serve as an enclosing structure for the battery unit 400, enhancing the reliability of the battery 100 while reducing the occupation of internal space within the battery 100.

Taking the connection plate 20 being a rectangular plate as an example, the first direction y may be parallel to a length direction of the connection plate 20, and the second direction z may be parallel to a width direction of the connection plate 20.

In some embodiments, the first end plate 4011, the second end plate 4012, and two connection plates 20 may enclose to form a frame 401, with the battery cells 10 disposed within the frame 401.

In some embodiments, the first end plate 4011 and the second end plate 4012 may be oppositely disposed along the first direction y, and two connection plates 20 may be oppositely disposed along the second direction z. Two ends of the first end plate 4011 along the thickness direction x are respectively connected to ends of the two connection plates 20 along the first direction y, and two ends of the second end plate 4012 along the thickness direction x are respectively connected to the other ends of the two connection plates 20 along the first direction y, enclosing to form a rectangular frame.

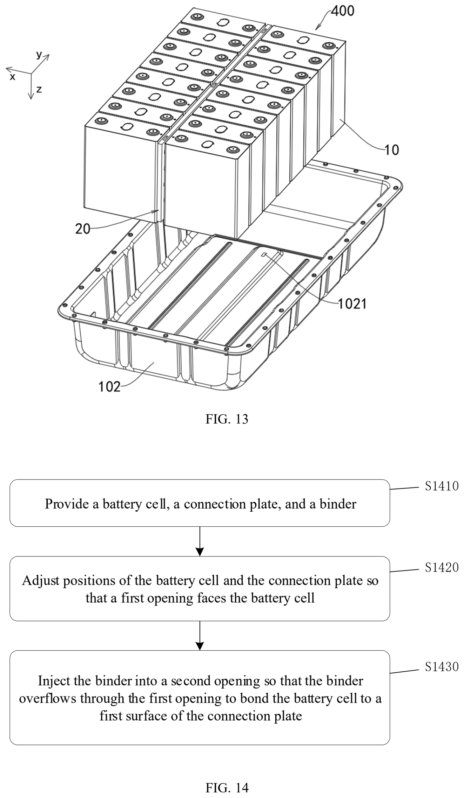

FIG. 13 is a structural schematic diagram of a second box portion 102, a battery unit 400, and a connection plate 20 provided by some embodiments of this application.

As shown in FIG. 5, FIG. 12, and FIG. 13, in some optional embodiments of this application, the battery 100 further includes a box 110. The battery unit 400 and the connection plate 20 are accommodated within the box 110, the box 110 including a connection structure 1021. The connection plate 20 is connected to the connection structure 1021, and the second surface 22 is disposed at an end of the connection plate 20 away from the connection structure 1021.

The connection structure 1021 may be a structure within the box 110 configured to connect with the connection plate 20. The connection structure 1021 may be connected to the connector 23, and the specific arrangement form of the connector 23 may depend on the type of connection between the connector 23 and the connection structure 1021. For example, when the connection plate 20 and the box 110 are connected by snap-fit, one of the connector 23 and the connection structure 1021 may be a groove, and the other may be a protrusion; when the connection plate 20 and the box 110 are connected by threads, one of the connector 23 and the connection structure 1021 may have an internal thread, and the other may have an external thread.

In the production process of related batteries, after the bonding of the connection plate 20 to the battery cells 10, the connection plate 20 and the battery cells 10 need to be integrally installed into the box 110. However, the overall size of the connection plate 20 and the battery cells 10 approximates the size of the box 110, making the installation of the connection plate 20 and the battery cells 10 into the box 110 difficult. This is not conducive to rapid production of the battery 100, resulting in lower production efficiency of the battery 100.

Firstly, altering the structure of the connection plate 20 enables the connection plate 20 to have a first opening 211 and a second opening 221 in communication with each other, facilitating the bonding step between the connection plate 20 and the battery cells 10 to be performed after the battery cells 10 and the connection plate 20 are installed in the box 110 of the battery 100. This allows the connection plate 20 and the battery cells 10 to be independently installed into the box 110, reducing the difficulty of installing the battery cells 10 and the connection plate 20 into the box 110 and facilitating an increase in production efficiency of the battery 100. Second, providing the box 110 provides a main housing structure for the battery 100, enhancing the structural strength of the battery 100. Thirdly, providing the connection structure 1021 enables stable installation of the connection plate 20 within the box 110, facilitating determination of the positional relationship between the battery unit 400 and the connection plate 20 and improving the assembly efficiency of the internal structure of the battery 100.

Referring to FIG. 12, in some embodiments, the box 110 may include a first box portion 101 and a second box portion 102 connected to each other. The battery unit 400 and the connection plate 20 may be placed in a space formed after the connection of the first box portion 101 and the second box portion 102. The shapes of the first box portion 101 and the second box portion 102 may be determined based on the shape of the battery unit 400.

Referring to FIG. 12, in some embodiments, the second box portion 102 may be disposed below the first box portion 101 along the second direction z, and the connection structure 1021 may be provided within the second box portion 102.

In some embodiments, the battery 100 may further include other structures, such as a busbar component configured to achieve electrical connection between multiple battery cells 10, which are not detailed herein one by one.

In some optional embodiments of this application, an electric apparatus is provided, including the battery 100 described above, the battery 100 being configured to provide electrical energy.

FIG. 14 is a schematic flowchart of a manufacturing method for a battery 100 provided by some embodiments of this application.

As shown in FIG. 14, in some optional embodiments of this application, a manufacturing method for the battery 100 is provided, including the following steps:
S1410. Provide a battery cell 10, a connection plate 20, and a binder 30, the connection plate 20 including two first surfaces 21 and a second surface 22 connecting the two first surfaces 21, the two first surfaces 21 being oppositely disposed along a thickness direction x of the connection plate 20, at least one first surface 21 being provided with a first opening 211, the second surface 22 being provided with a second opening 221, and the second opening 221 being in communication with the first opening 211.

S1420. Adjust positions of the battery cell 10 and the connection plate 20 so that the first opening 211 faces the battery cell 10.

S1430. Inject the binder 30 into the second opening 221 so that the binder 30 overflows through the first opening 211 to bond the battery cell 10 to the first surface 21 of the connection plate 20.

In S1410, the first surface 21 is configured to be bonded to the battery cell 10 via the binder 30. S1410 may involve providing a battery unit 400, the connection plate 20, and the binder 30, the battery unit 400 including multiple battery cells 10.

In S1420, adjusting a relative distance between the battery cell 10 and the connection plate 20 may be performed so that the distances from the battery cells 10 to the connection plate 20 are identical, and the first surface 21 faces the battery cell 10, positioning the first opening 211 toward the battery cell 10 so that the binder 30 can connect the battery cell 10 to the first surface 21.

Injecting the binder 30 into the second opening 221 causes the binder 30 to overflow through the first opening 211, filling a gap between the battery cell 10 and the connection plate 20 and bonding the battery cell 10 to the connection plate 20. This facilitates control over the amount of the binder 30 used during bonding of the first surface 21 to the battery cell 10, improving the accuracy of the amount of the binder 30. This reduces the problem of excessive binder 30 between the first surface 21 and the battery cell 10 leading to overflow and interference with other components within the battery 100, as well as the problem of insufficient binder 30 between the first surface 21 and the battery cell 10 resulting in reduced reliability of the battery 100.

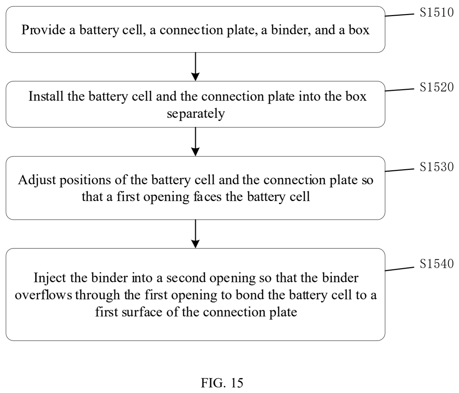

FIG. 15 is a schematic flowchart of a manufacturing method for the battery 100 provided by other embodiments of this application.

As shown in FIG. 15, in some optional embodiments of this application, the manufacturing method further includes:
S1510. Provide a box 110.

Adjusting positions of the battery cell 10 and the connection plate 20 includes the following steps:
S1520. Install the battery cell 10 and the connection plate 20 into the box 110 separately.

S1530. Adjust the positions of the battery cell 10 and the connection plate 20 so that the first opening 211 faces the battery cell 10.

In S1510, providing the battery unit 400, the connection plate 20, the binder 30, and the box 110 may be performed, where the battery unit 400 may include multiple battery cells 10, and the box 110 may include the first box portion 101 and the second box portion 102.

In S1520, installing the battery cell 10 and the connection plate 20 into the second box portion 102 may be performed separately. For example, the connection plate 20 is connected to a connection structure 1021 on the second box portion 102 via the connector 23 thereon, and the battery unit 400 is installed on one side of the connection plate 20 along the thickness direction x.

In S1530, adjusting a relative position between the battery unit 400 and the connection plate 20 may be performed so that the distances from the multiple battery cells 10 of the battery unit 400 to the connection plate 20 are identical. Understandably, the specific distance between the battery unit 400 and the connection plate 20 may be set based on the type of battery cell in actual production.

Installing the battery cell 10 and the connection plate 20 into the box 110 separately enables independent installation of the connection plate 20 and the battery cell 10 into the box 110. This reduces the difficulty of installing the battery cell 10 and the connection plate 20 into the box 110, facilitating an increase in production efficiency of the battery 100.

In some optional embodiments of this application, a connection plate 20 of a battery 100 is provided, including two first surfaces 21 and a second surface 22. The two first surfaces 21 are oppositely disposed along a thickness direction x of the connection plate 20. Each first surface 21 is configured to be bonded to a battery cell 10 via a binder 30. Both first surfaces 21 are provided with multiple first openings 211, and the first openings 211 on the two first surfaces 21 are opposite each other along the thickness direction x. The second surface 22 connects the two first surfaces 21 and is provided with a second opening 221, the second opening 221 being in communication with the first opening 211. A receiving cavity 24 is provided inside the connection plate 20, the receiving cavity 24 being configured to enable communication between the first opening 211 and the second opening 221. The first opening 211 is circular, and the multiple first openings 211 on the first surface 21 are arranged in a rectangular array along a first direction y and a second direction z. Among the multiple first openings 211 on the first surface 21, an area of a first opening 211 near a center of the first surface 21 is greater than or equal to an area of a first opening 211 near an edge of the first surface 21.

Finally, the above embodiments are merely intended to illustrate the technical solutions of this application and not to limit the application. Although this application has been described in detail with reference to the foregoing embodiments, those of ordinary skill in the art should understand that modifications may still be made to the technical solutions described in the foregoing embodiments, or equivalent replacements may be made to some or all of the technical features thereof. Such modifications or replacements do not cause the essence of the corresponding technical solutions to depart from the scope of the technical solutions of the embodiments of this application and should be encompassed within the scope of the claims and description of this application. In particular, as long as no structural conflict exists, the technical features mentioned in the various embodiments may be combined in any manner. This application is not limited to the specific embodiments disclosed herein but includes all technical solutions falling within the scope of the claims.

## Claims

1. A connection plate of a battery, comprising:
two first surfaces oppositely disposed along a thickness direction of the connection plate, each first surface being configured to be bonded to a battery cell via a binder, and at least one first surface being provided with a first opening; and
a second surface connecting the two first surfaces, the second surface being provided with a second opening, wherein the second opening is in communication with the first opening.

2. The connection plate according to claim 1, wherein both first surfaces are provided with the first opening.

3. The connection plate according to claim 2, wherein the first openings on the two first surfaces are opposite each other along the thickness direction.

4. The connection plate according to any one of claims 1 to 3, wherein a receiving cavity is provided inside the connection plate, the receiving cavity being configured to enable communication between the first opening and the second opening.

5. The connection plate according to any one of claims 1 to 4, wherein the first opening is at least one of a rectangle, circle, square, rhombus, trapezoid, triangle, or ellipse.

6. The connection plate according to any one of claims 1 to 5, wherein the first surface is provided with multiple first openings.

7. The connection plate according to claim 6, wherein the multiple first openings on the first surface are arranged in a rectangular array.

8. The connection plate according to claim 6 or 7, wherein among the multiple first openings on the first surface, an area of a first opening near a center of the first surface is greater than or equal to an area of a first opening near an edge of the first surface.

9. The connection plate according to any one of claims 6 to 8, wherein the first opening extends along a first direction, the multiple first openings are spaced apart along a second direction, and the first direction, the second direction, and the thickness direction are pairwise perpendicular.

10. A battery, comprising:
a battery unit comprising multiple battery cells arranged along a first direction;
the connection plate according to any one of claims 1 to 9, wherein the first direction is perpendicular to the thickness direction of the connection plate; and
a binder, at least a portion of the binder being exposed at the first opening to bond the first surface and the multiple battery cells.

11. The battery according to claim 10, wherein multiple battery units are provided, the multiple battery units being arranged along the thickness direction;
wherein both first surfaces of the connection plate are provided with the first opening, and the two first surfaces of the connection plate are bonded to multiple battery cells of two adjacent battery units via the binder, respectively.

12. The battery according to claim 10 or 11, wherein the battery comprises a first end plate and a second end plate, the first end plate and the second end plate being respectively disposed at two ends of the battery unit along the first direction;
wherein the connection plate connects the first end plate and the second end plate.

13. The battery according to any one of claims 10 to 12, further comprising a box, wherein the battery unit and the connection plate are accommodated within the box;
wherein the box comprises a connection structure, the connection plate is connected to the connection structure, and the second surface is disposed at an end of the connection plate away from the connection structure.

14. An electric apparatus comprising the battery according to any one of claims 10 to 13, wherein the battery is configured to provide electrical energy.

15. A manufacturing method for a battery comprising:
providing a battery cell, a connection plate, and a binder, the connection plate comprising two first surfaces and a second surface connecting the two first surfaces, the two first surfaces being oppositely disposed along a thickness direction of the connection plate, at least one first surface being provided with a first opening, the second surface being provided with a second opening, and the second opening being in communication with the first opening;
adjusting positions of the battery cell and the connection plate so that the first opening faces the battery cell; and
injecting the binder into the second opening so that the binder overflows through the first opening to bond the battery cell to the first surface of the connection plate.

16. The manufacturing method according to claim 15, further comprising:
providing a box;
wherein the adjusting positions of the battery cell and the connection plate comprises:
installing the battery cell and the connection plate into the box separately; and
adjusting the positions of the battery cell and the connection plate so that the first opening faces the battery cell.
